# EUROPÄISCHE PATENTSCHRIFT

(11) **EP 0 920 352 B1**
(45) Veröffentlichungstag und Bekanntmachung des Hinweises auf die Patenterteilung: **29.06.2005**
(21) Anmeldenummer: 98932087.4
(22) Anmeldetag: 27.05.1998
(51) Int. Cl.: B01J 8/00

(54) **VERFAHREN ZUR DURCHFÜHRUNG VON REAKTIONEN IN FLUIDISIERTEN PARTIKELSCHICHTEN**
METHOD FOR CONDUCTING REACTIONS IN FLUIDIZED PARTICLE LAYERS
PROCEDE POUR EFFECTUER DES REACTIONS DANS DES COUCHES DE PARTICULES FLUIDISEES

(30) Priorität: 28.05.1997 DE 19722382; 30.05.1997 DE 19722570
(43) Veröffentlichungstag der Anmeldung: 09.06.1999
(73) Patentinhaber: Air Liquide Deutschland GmbH, 40235 Düsseldorf (DE); Kerr-McGee Pigments GmbH & Co. KG, 47829 Krefeld (DE)
(72) Erfinder: GROSS, Gerhard, D-47877 Willich (DE); LAILACH, Günter, D-47799 Krefeld (DE); WÜLBECK, Dieter, D-47829 Krefeld (DE)
(86) Internationale Anmeldenummer: PCT/EP1998/003114
(87) Internationale Veröffentlichungsnummer: WO 1998/053908

(56) Entgegenhaltungen:
- EP-A- 0 080 773
- EP-A- 0 610 944
- FR-A- 2 644 795
- US-A- 3 377 350
- US-A- 5 223 550

## Beschreibung

Die Erfindung betrifft ein Verfahren zur Durchführung von Reaktionen in fluidisierten Partikelschichten, wobei Reaktanten in die fluidiserten Partikelschichten eingeblasen werden.

Bekannt sind Reaktionen in fluidisierten Partikelschichten, wobei diese Schichten stationäre Schichten in sogenannten Fließbett- oder Wirbelschichtreaktoren oder Ströme in Gas suspendierter Partikel in Reaktoren mit zirkulierender Wirbelschicht sein können, bei denen der aus dem Reaktor ausgetragene Partikelstrom vollständig oder teilweise vom Gasstrom getrennt und in den unteren Bereich des Reaktors zurückgeführt wird. Die fluidiserten Partikel können sowohl Reaktanten sein, wie z. B. bei Röstprozessen, Kohleverbrennung, Chlorierungsprozessen usw., als auch Katalysatoren, wie z. B. bei Crackprozessen, Hydrierungsreaktionen usw., oder Inertmaterial. Bei der Vielzahl der im technischen Maßstab durchgeführten Reaktionen in fluidiserten Partikelschichten (FPS), bei denen das Fluidisierungsmedium gasförmig ist, stellen die Anströmböden, durch die die Fluidiserungsgase in die Reaktoren eingeleitet werden, häufig ein Problem dar, weil sie sowohl chemischen wie technischen Angriffen ausgesetzt sind. Ein weiteres Problem entsteht bei großen Reaktoren dadurch, daß die gleichmäßige Gasverteilung über große Anströmflächen schwierig ist und daß an die mechanische Tragfähigkeit der Anströmböden bei Betriebsstillstand hohe Anforderungen gestellt werden. Schließlich kann bei seitlichem Parikeleintrag eine unzureichende radiale Partikelvermischung zu Zonen mit unterschiedlichen Reaktionsbedingungen innerhalb der FPS führen.

Besondere Probleme bei der Durchführung von Reaktionen in FPS entstehen dann, wenn zwei oder mehr gasförmige oder flüssige Reaktanten getrennt in eine FPS eingeleitet werden sollen, weil sie beispielsweise beim Mischen außerhalb der FPS explosive Mischungen bilden. Leitet man einen oder mehrere dieser Reaktanten durch Öffnungen in der Reaktorwand ein, entstehen Probleme durch ungleichmäßige Verteilung der verschiedenen Reaktanten in der FPS. Um dies zu vermeiden, werden komplizierte Apparate eingesetzt, bei denen die verschiedenen Reaktanten über getrennte Zuleitungen durch den Anströmboden eingeleitet werden.

Bekannt ist der Einsatz von Sauerstoff in stationären oder zirkulierenden Wirbelschicht- bzw. Fließbettreaktoren bei oxidierenden Reaktionen, wie zum Beispiel dem Rösten sulfidischer Erze, der thermischen Spaltung von Abfallschwefelsäuren, der Kalzinierung von Tonerde oder der Verbrennung von Klärschlämmen. Durch die Verwendung von Luft als Fluidisierungsgas werden die Feststoffpartikel fluidisiert, daß bedeutet in Schwebe gehalten und gleichzeitig wird Sauerstoff für die oxidierenden Reaktionen mit den Reaktanten zugeführt. Fluidisierte Partikel können sowohl oxidierbare Reaktanten, Inertstoffe oder Katalysatoren sein.

Femer ist bekannt, die Kapazität von Vorrichtungen dadurch zu erhöhen und bei exothermen Reaktionen, wie der Spaltung von Abfallschwefelsäure, den Brennstoffbedarf dadurch zu reduzieren, daß anstelle von Verbrennungsluft Sauerstoff oder mit Sauerstoff angereicherte Luft verwendet wird. Erfolgt die Verbrennung der Brennstoffe mit Brennern (DE 2 506 438), ist diese Vorgehensweise unproblematisch. Vorteile bringt die Verwendung sauerstoffangereicherter Luft auch bei der Durchführung derartiger Reaktionen in Fließbettreaktoren (DE 3 328 708). Jedoch sind hier dem Sauerstoffgehalt einerseits durch die Beständigkeit der Werkstoffe im Bereich des Zuleitungssystems für die Fluidisierungsluft und andererseits durch eine Temperaturerhöhung in unmittelbarer Nähe des Anströmbodens aufgrund der Sauerstoffanreicherung relativ enge Grenzen gesetzt. Diese führt zu Problemen hinsichtlich der mechanischen Festigkeit und Verzunderung der Böden.

In der US-A-3377350 wird ein Verfahren zur Produktion von Melamin in einem Fließbettreaktor beschrieben, wo geschmolzener Harnstoff mit einem Gas zerstäubt und durch eine Düse mit mindestens Überschallgeschwindigkeit in das Fließbett eingespritzt wird.

In der EP-A-0610944 wird eine Verbrennungskammer mit einer fluidisierten Partikelschicht beschrieben, bei der Dampf mit Schallgeschwindigkeit über Düsen eingeleitet wird, um eine Vermischung der Produkte mit zurückgeführtem Material zu erzielen.

Aufgabe der vorliegenden Erfindung war es, ein Verfahren zur Durchführung von Reaktionen in fluidisierten Partikelschichten zur Verfügung zu stellen, mit dem die oben genannten Probleme, wie ungleichmäßige Verteilung in der FPS, chemische und mechanische Beständigkeit und Tragfähigkeit der Anströmböden, ungleichmäßige Gasverteilung und unzureichende radiale Partikelvermischung und unterschiedliche Reaktionsbedingungen in der FPS, vermieden werden und mit dem effektiv und kostengünstig gearbeitet werden kann.

Gelöst wurde die Aufgabe durch ein Verfahren mit den in Anspruch 1 beschriebenen Merkmalen.

Überraschend wurde gefunden, daß die oben genannten Probleme weitgehend oder vollständig durch transversale Injektion von Reaktanten mit Übeschallgeschwindigkeit in die FPS gelöst werden können.

Vorteilhaft ist ein Reaktor mit Anströmboden, durch den ein Fluidisierungsgas in eine über diesem Anströmboden befindliche Partikelschicht zwecks Erzeugung einer fluidisierten Partikelschicht eingeleitet wird, dadurch gekennzeichnet, daß in die Reaktorwand oberhalb des Anströmbodens eine oder mehrere Überschalldüsen angeordnet sind.

Bei den Reaktoren handelt es sich um Reaktoren, bei denen durch Einspeisung von Fluidisierungsgas durch einen Anströmboden über diesem Boden eine fluidisierte Partikelschicht gebildet wird und bei denen durch transversale Überschalldüsen radial oder in einem Winkel zum Radius Reaktanten mit Überschallgeschwindigkeit in diese fluidisierte Partikelschicht injiziert werden.

Die Überschalldüsen, auch als Laval-Düsen bekannt, werden bei Bedarf bevorzugt mit einem Kühlmantel versehen.

Überschalldüsen (Laval-Düsen) haben in der Technik eine weite Anwendung gefunden und werden dazu benutzt, um Gasströmungen von Unterschallgeschwindigkeit auf Überschallgeschwindigkeit zu beschleunigen.

Es können eine oder eine Vielzahl von Überschalldüsen am Umfang des Reaktors angebracht sein.

Die Düsen können in einer oder mehreren Ebenen angeordnet sein.

Der Abstand zwischen den Düsen und dem Anströmboden beträgt vorzugsweise mindestens 100 mm, besonders bevorzugt 250 bis 600 mm.

Der Einbau der Laval-Düsen erfolgt vorzugsweise so, daß sie mit der Reaktorinnenwand abschließen oder gegenüber dieser zurückgezogen sind.

Die Neigung der Düsen gegen die Horizontale beträgt vorzugsweise weniger als 20 °, besonders bevorzugt 0 °.

Die Überschalldüsen sind vorzugsweise radial oder in einem Winkel zum Radius angeordnet.

Die Abmessungen des engsten Querschnittes und des Austrittsquerschnittes der Laval-Düsen richten sich nach der zu injizierenden Menge, der Temperatur und der Mach-Zahl der aus der Düse austretenden Reaktanten und dem zur Verfügung stehenden Druck der Komponenten.

Die Auslegung der Düsen erfolgt nach den dem Fachmann bekannten Formeln für Laval-Düsen.

Die Austrittsgeschwindigkeit der Reaktanten aus der oder den Überschalldüse(n) beträgt vorzugsweise mindestens Mach 1, besonders vorzugsweise mindestens Mach 1,5. Die Austrittsgeschwindigkeit ist besonders bevorzugt geringer als Mach 3.

Unterschiedliche Reaktanten können durch getrennte Düsen injiziert werden.

Als Reaktant kann besonders bevorzugt reiner Sauerstoff oder sauerstoffangereicherte Luft, vorzugsweise mit mindestens 30 Vol.-% O₂, injiziert werden.

Erfindungsgemäß können neben dem Sauerstoff zusätzlich brennbare Reaktanten durch separate Düsen durch transversale Injektion mit Überschallgeschwindigkeit der Wirbelschicht zugeführt werden.

Durch das transversale Einblasen von Sauerstoff und gegebenenfalls von brennbaren Reaktanten mit Überschallgeschwindigkeit wird die Mischungsenergie in der fluidisierten Partikelschicht erhöht und damit der radiale Wärme- und Stofftransport verbessert. Daraus resultiert ein gleichmäßiges kastenförmiges Temperaturprofil und eine homogene Stoffverteilung, was zu einer gleichmäßigen Produktqualität führt. Das zusätzliche Angebot an Sauerstoff ermöglicht eine erhebliche Steigerung der Durchsatzleistung bei gegebener Anströmfläche bzw. eine Verkleinerung der Anströmfläche beim Neubau eines Wirbelschichtreaktors.

Das beschriebene Verfahren der transversalen Überschallinjektion von Sauerstoff und gegebenenfalls brennbaren Reaktanten läßt sich bei allen Oxidationsprozessen in Wirbelschichten vorteilhaft einsetzen, beispielsweise bei dem oxidierenden Rösten sulfidischer Erze oder dem Vergasen von Kohle, bei der thermischen Spaltung von Abfaflschwefelsäuren, Salzen, Beiz- und Ablaugbädem, bei der Kalzinierung von Tonerde, der Verbrennung von Klärschlämmen oder Abfällen, bei dem Recycling von Gießereialtsänden, beim Regenerieren von Katalysatoren und beim Spalten von Salzsäure. Das erfindungsgemäße Verfahren ist dabei nicht auf die zuvor aufgeführten und nur beispielhaft genannten Prozesse beschränkt.

Vorteile bietet das erfindungsgemäße Verfahren besonders dann, wenn das Fluidisierungsgas und ein weiterer Reaktant erst in der FPS miteinander in Kontakt kommen sollen, wie dies beispielsweise bei Kalzinierprozessen der Fall ist. Hierbei wird mit Luft fluidisiert, und in der FPS wird ein Brennstoff verbrannt Bisher erforderte dieser Prozeß komplizierte Anströmböden, um die Luft und den Brennstoff getrennt durch eine Vielzahl von Öffnungen /Düsen durch den Anströmboden einzuleiten. Das erfindungsgemäße Verfahren ermöglicht hier nun die Brennstoffeinspeisung durch relativ wenige transversale Überschalldüsen und die Einleitung der Fluidisierungsluft durch einen einfachen Anströmboden mit kleinem Querschnitt, wobei die Betriebstemperatur des Anströmbodens unterhalb derjenigen nach dem Stand der Technik liegt. Durch die Brennstoffeinspeisung in die FPS mit Überschallgeschwindigkeit erfolgt eine ausgezeichnete radiale Vermischung von Brennstoff, Fluidisierungsluft und fluidisierten Partikeln. Durch zusätzliche Überschallinjektion von Sauerstoff kann zudem eine erhebliche Kapazitätssteigerung bei einem vorgegebenen Reaktor erreicht werden.

Als Prozesse, bei denen - wie oben beschrieben - durch transversale Überschallinjektion von Brennstoffen und ggf. Sauerstoff besondere Vorteile erzielt werden, seien außer den Kalzinierprozessen beispielhaft die codierende, thermische Behandlung von Erzen, die Entölung von Walzzundern und anderen, die Verbrennung von Klärschlamm oder Müll, die partielle oder vollständige Reduktion von Erzen, die thermische Spaltung von Metallchloriden oder -sulfaten, das oxidierende Rösten sulfidischer Erze usw. genannt.

Vorteile bietet das erfindungsgemäße Verfahren auch bei der Herstellung von Chloriden des Titans, Siliciums, Zirkons und anderer Metalle, bei der die Anströmböden einem besonders hohen chemischen Angriff ausgesetzt sind. Die Anströmböden können beispielsweise relativ gering gehalten werden.

Weitere Prozesse, bei denen die Erfindungen sich vorteilhaft auswirken, sind Verfahren zur Regenierung von Katalysatoren, insbesondere Verfahren zum Abbrennen von Kohlenstoffablagerungen und anderen. Die Aufzählung der Prozesse, bei denen das erfindungsgemäße Verfahren Vorteile bietet, erfolgt beispielhaft und ist nicht auf diese Prozesse beschränkt.

Die Erfindung soll anhand der nachfolgenden Beispiele näher erläutert werden.

### Vergleichsbeispiel 1

Ein Fließbettreaktor mit 4 m Durchmesser im Bereich des Anströmbodens (beispielsweise Typ Schlitzrost) wurde zur thermischen Spaltung von Metallsulfaten, die als Filterkuchen mit 68 %iger Schwefelsäure als Feuchte anfielen, eingesetzt. Die Spaltung erfolgt bei ca. 1000 °C, wobei Pyrit und Koks als Reduktionsmittel und Brennstoff eingesetzt wurden

In den Reaktor wurden 12,5 t/h oben genannten Filterkuchens, 2 t/h Pyrit und 2,45 t/h Koks eingespeist Durch den Rost (Anströmboden) wurden 20 000 m³/h Luft eingeleitet. 100 mm über dem Rost wurde eine Temperatur von 980 °C gemessen. 1 100 mm über dem Rost betrug die Temperatur 1 060 °C, im Gasaustrittskanal 1 070 °C. Der SO₂-Gehalt der aus dem Reaktor austretenden Gase lag bei 11,2 Vol.-% (bezogen auf trockenes Gas).

### Vergleichsbeispiel 2

Ein Fließbettreaktor mit 4 m Durchmesser im Bereich des Anströmbodens (beispielsweise Typ Schlitzrost) wurde zur thermischen Spaltung von Metallsulfaten, die als Filterkuchen mit 68 %iger Schwefelsäure als Feuchte anfielen, eingesetzt. Die Spaltung erfolgt bei ca. 1 000 °C, wobei Pyrit und Koks als Reduktionsmittel und Brennstoff eingesetzt wurden.

In den Reaktor wurden 20 t/h des oben genannten Filterkuchens, 3,3 t/h Pyrit und 3 t/h Koks eingespeist. Durch den Rost (Anströmboden) wurden 18 000 m³/h (im Normzustand) Luft und 1 900 m³/h O₂ (entsprechend 28,1 Vol.-% O₂ im Fluidisierungsgas) eingeleitet. Die erforderliche Motorleistung des Gebläses, mit dem das Luft/O₂-Gemisch gefördert wurde, betrug 142 kW, der Vordruck vor dem Rost lag bei 170 mbar. Es wurde eine Temperatur von 995 °C in einem Abstand von 100 mm über dem Rost gemessen. In einem Abstand von 1 100 mm über dem Rost betrug die Temperatur 1 060 °C, im Gasaustrittskanal des Reaktors lag die Temperatur bei 1 065 °C.

Von den festen Reaktionsprodukten (Metalloxidgemisch + Asche) wurden ca. 85 % als Staub mit den Reaktionsgasen ausgetragen und ca. 15 % als grobes sandförmiges Bettmaterial unten aus dem Reaktor abgezogen. Das aus dem Reaktor austretende Reaktionsgas enthielt 18,3 Vol.-% SO₂ (bezogen auf trockenes Gas).

### Vergleichsbeispiel 3

An den Reaktor gemäß Vergleichsbeispiel 1 und 2 wurden gleichmäßig über den Umfang verteilt 6 Gaseintrittsstutzen angebracht, durch die Sauerstoff in einer Höhe von 350 mm über dem Rost eingeleitet wurde. Die Sauerstoffeinleitung erfolgte durch Rohre aus hitzebeständigem Stahl mit 24 mm Innendurchmesser, die so montiert waren, daß sie an der Innenfläche der Reaktorausmauerung endeten.

Die Einspeisung der Feststoffe Filterkuchen, Pyrit und Koks erfolgte wie in Vergleichsbeispiel 1 und 2. Durch den Rost wurden nur 18.100 m³/h Luft eingespeist. Die Einleitung der 1 900 m³/h O₂ erfolgte gleichmäßig durch die 6 Einleitrohre. Die Leistungsaufnahme des Gebläsemotors betrug bei einem Vordruck von 155 mbar nur noch 124 kW. Die Temperatur in einer Höhe von 100 mm über dem Rost betrug nur noch 920 °C. Die Meßstellen in einer Höhe von 1 100 mm über dem Rost zeigten Temperaturen von 940 und 1 135 °C. Im Gasaustrittskanal lag die Temperatur bei 1 070 °C.

Nach 2 h Versuchsdauer wurden im Bettmaterial grobe versinterte Stücke bis Faustgröße beobachtet. Da deren Anteil im weiteren Versuchsverlauf zunahm, wurde der Versuch nach 6 h abgebrochen. Die ausgebauten Gaseinleitrohre zeigten am inneren Ende starke Verzunderung.

### Beispiel 1

In die 6 Stutzen im Reaktormantel wurden statt der einfachen Gaseinleitrohre (gemäß Vergleichsbeispiel 3) erfindungsgemäß Laval-Düsen eingebaut, die von einem Kühlmantel umhüllt waren, der mit Kühlwasser durchströmt wurde. Das Düsenende war gegenüber der Reaktorwand um 20 mm zurückversetzt.

Durch die Laval-Düsen (kleinster Durchmesser 10,2 mm) wurden bei einem Vordruck von 4,9 bar (absolut) und einem Reaktordruck von 1 bar absolut insgesamt 1 900 m³/h O₂ eingeleitet. Die berechnete Austrittsgeschwindigkeit des Sauerstoffs betrug Mach 1,7. Die Luftmenge und die Betriebsdaten des Luftgebläses entsprachen denen aus Vergleichsbeispiel 2, die Mengen der eingespeisten Feststoffe denen aus Vergleichsbeispielen 1 und 2. In einer Höhe von 100 mm über dem Rost betrug die Temperatur 920 °C. An allen Meßstellen 1 100 mm über dem Rost wurden 1 060 bis 1 065 °C gemessen, im Gasaustrittskanal lag die Temperatur bei 1 065 °C.

Das abgezogene Bettmaterial war gleichmäßig sandförmig ohne versinterte Brocken. Bei einer Kontrolle des Rostbodens nach 8 Monaten Betriebszeit zeigte dieser wesentlich weniger Zunderbildung als nach vergleichbarer Betriebsdauer unter den herkömmlichen Betriebsbedingungen entsprechend Vergleichsbeispiel 1. Dadurch wurde insbesondere auch eine gleichmäßige Verteilung der Fluidisierungsluft während der gesamten Betriebsdauer gewährleistet. Diese ist für den Prozeß wichtig, weil bei schlechter Verteilung Metallsulfate zusammen mit dem Metalloxidstaub ausgetragen werden können.

### Beispiel 2

In den mit den Laval-Düsen ausgerüsteten Reaktor (gemäß Beispiel 1) wurden nur 16 000 m³/h Fluidisierungsluft eingeleitet. Der O₂-Druck vor den Laval-Düsen (kleinster Durchmesser 13,2 mm) wurde auf 7,8 bar absolut erhöht, so daß insgesamt 4 000 m³/h O₂ eingeleitet wurden. Die berechnete Austrittsgeschwindigkeit aus den Düsen betrug ca. Mach 2. Der Leistungsbedarf des Gebläsemotors fiel auf 112 kW bei 135 mbar Vordruck. In den Reaktor konnten jetzt 28 t/h Filterkuchen, 4,5 t/h Pyrit und 4 t/h Koks eingespeist werden. Die Temperatur 100 mm über dem Rost stieg auf 940 °C, die anderen Temperaturen waren gleich Beispiel 1.

Im Bettmaterial wurden keine Versinterungen beobachtet. Das als Staub augetragene Metalloxidgemisch war homogen. Der SO₂-Gehalt der Reaktionsgase lag mit 25,0 Vol.-% (bezogen auf trockenes Gas) um 6,7 Vol.-% höher als im Beispiel 1, wodurch eine weitere Verarbeitung zu Schwefelsäure erheblich erleichtert wurde. Gegenüber Beispiel 1 konnte die Spaltleistung um 40 % von 20 t/h auf 28 t/h Filterkuchen erhöht werden. Nach drei Monaten Betriebsdauer zeigten die Laval-Düsen keinen sichtbaren Verschleiß.

### Beispiel 3

Wie in Beispiel 1 wurden 18 100 m³/h Fluidisierungsluft in den Reaktor eingespeist. Analog zu Beispiel 2 wurden 4 000 m³/h O₂ durch die Laval-Düsen mit Mach 2 Austrittsgeschwindigkeit eingeblasen. Die Filterkurcheneinspeisung konnte auf 28,8 t/h erhöht werden. Es wurden außerdem 6,2 t/h Pyrit und 4,1 t/h Koks eingespeist. Der SO₂-Gehalt in den Reaktionsgasen lag bei 23,6 Vol.-% (bezogen auf trockenes Gas).

Durch die erfindungsgemäße O₂-Einspeisung über Lavel-Düsen war somit gegenüber Vergleichsbeispiel 1 eine Steigerung der Filterkuchen-Spaltkapazität auf 144 % möglich.

## Patentansprüche

1. Verfahren zur Durchführung von Reaktionen in einer fluidisierten Partikelschicht unter transversaler Einleitung von einem oder mehreren Reaktanden in die fluidisierte Partikelschicht, **dadurch gekennzeichnet, dass** die Einleitung der Reaktanden in die fluidisierte Partikelschicht durch transversale Injektion mit Überschallgeschwindigkeit durch Überschalldüsen erfolgt und als Reaktand eines der Gase reiner Sauerstoff, sauerstoffangereicherte Luft, sauerstoffhaltiges Gas, oder Chlor durch transversale Überschallinjektion in die fluidisierte Partikelschicht eingespeist werden.

2. Verfahren nach Anspruch 1, **dadurch gekennzeichnet, dass** der Reaktand Sauerstoff oder ein sauerstoffhaltiges Gas ist und durch zusätzliche Überschalldüsen Brennstoffe mit Überschallgeschwindigkeit in die fluidisierte Partikelschicht eingeleitet werden.

3. Verfahren nach einem der Ansprüche 1 bis 2, **dadurch gekennzeichnet, dass** die Austrittsgeschwindigkeit der Reaktanden aus den Überschalldüsen mindestens 1,5 Mach beträgt.

4. Verfahren nach einem der Ansprüche 1 bis 3, **dadurch gekennzeichnet, dass** der Reaktand Sauerstoff oder ein sauerstoffhaltiges Gas ist und die Fluidisierung der Partikelschicht mittels durch den Anströmboden eingeleiteter Luft oder mit Sauerstoff angereicherter Luft erfolgt.

5. Verfahren nach einem der Ansprüche 1 bis 4, **dadurch gekennzeichnet, dass** bei dem Verfahren eine oder eine Vielzahl von Überschalldüsen am Umfang des Reaktors angebracht oder die Überschalldüsen in einer oder mehreren Ebenen angeordnet sind.

6. Verfahren nach einem der Ansprüche 1 bis 5, **dadurch gekennzeichnet, dass** unterschiedliche Reaktanden durch die Düsen injiziert werden.

## Claims

1. Process for carrying out reactions in a fluidized particle bed with transversal introduction of one or more reactants into the fluidized particle bed, **characterized in that** the reactants are introduced into the fluidized particle bed by transversal injection at supersonic speed by supersonic nozzles and, as reactant, one of the gases pure oxygen, oxygen-enriched air, oxygen-containing gas or chlorine is introduced into the fluidized particle bed by transversal supersonic injection.

2. Process according to Claim 1, **characterized in that** the reactant is oxygen or an oxygen-containing gas and fuels are introduced into the fluidized particle bed at supersonic speed through additional supersonic nozzles.

3. Process according to either Claim 1 or 2, **characterized in that** the exit velocity of the reactants from the supersonic nozzles is at least Mach 1.5.

4. Process according to one of Claims 1 to 3, **characterized in that** the reactant is oxygen or an oxygen-containing gas and the particle bed is fluidized by air or oxygen-enriched air introduced through the gas distributor plate.

5. Process according to one of Claims 1 to 4, **characterized in that**, in the process, one or a multiplicity of supersonic nozzles are mounted at the periphery of the reactor, or the supersonic nozzles are disposed in one or more planes.

6. Process according to one of Claims 1 to 5, **characterized in that** different reactants are injected through the nozzles.

## Revendications

1. Procédé pour réaliser des réactions dans une couche fluidisée de particules en y introduisant transversalement un ou plusieurs réactifs, **caractérisé en ce que** cette introduction se fait par injection transversale à vitesse supersonique au moyen d'ajutages supersoniques et **en ce que** comme réactif, on injecte dans la couche fluidisée de particules et par injection supersonique un gaz sélectionné parmi le chlore, l'oxygène pur, l'air enrichi en oxygène ou un gaz qui contient de l'oxygène.

2. Procédé selon la revendication 1, **caractérisée en ce que** le réactif est l'oxygène ou un gaz qui contient de l'oxygène et **en ce que** du combustible est introduit à une vitesse supersonique dans la couche fluidisée de particules au moyen d'ajutages supersoniques supplémentaires.

3. Procédé selon l'une des revendications 1 à 2, **caractérisé en ce que** les réactifs sortent des ajutages supersoniques à une vitesse d'au moins 1,5 Mach.

4. Procédé selon l'une des revendications 1 à 3, **caractérisé en ce que** le réactif est l'oxygène ou un gaz qui contient de l'oxygène et **en ce que** la couche de particules est fluidisée au moyen d'air introduit par le fond d'injection ou au moyen d'air enrichi en oxygène.

5. Procédé selon l'une des revendications 1 à 4, **caractérisé en ce que** dans ce procédé, un ou plusieurs ajutages supersoniques sont installés sur le pourtour du réacteur ou sont agencés dans un ou plusieurs plans.

6. Procédé selon l'une des revendications 1 à 5, **caractérisé en ce que** différents réactifs sont injectés par les ajutages.
